# FASCICULE DE BREVET EUROPEEN

(11) **EP 3 719 277 B1**
(45) Date de publication et mention de la délivrance du brevet: **27.11.2024**
(21) Numéro de dépôt: 20165533.9
(22) Date de dépôt: 25.03.2020
(51) Int. Cl.: F02C 7/14, F02C 7/18

(54) **FLUIDE CALOPORTEUR POUR SYSTÈME DE REFROIDISSEMENT DE TURBORÉACTEUR POUR AÉRONEF**
WÄRMEÜBERTRAGUNGSFLÜSSIGKEIT FÜR KÜHLSYSTEM EINES TURBOTRIEBWERKS FÜR LUFTFAHRZEUG
HEAT-TRANSFER FLUID FOR JET ENGINE COOLING SYSTEM FOR AN AIRCRAFT

(30) Priorité: 03.04.2019 FR 1903541
(43) Date de publication de la demande: 07.10.2020
(73) Titulaire: Safran Nacelles, 76700 Gonfreville-l'Orcher (FR)
(72) Inventeur: PEYRON, Vincent, 77550 MOISSY CRAMAYEL (FR); BOUCHOUT, Jean-Nicolas, 77550 MOISSY CRAMAYEL (FR)
(74) Mandataire: Germain Maureau

(56) Documents cités:
- WO-A1-2018/055307
- DE-A1- 102016 219 680
- FR-A1- 2 914 365
- US-A1- 2014 345 292
- US-A1- 2015 192 033
- "3M Novec 7500 Engineered Fluid", 1 September 2009 (2009-09-01), USA, pages 1 - 8, XP055006988, Retrieved from the Internet <URL:http://multimedia.3m.com/mws/mediawebserver?mwsId=SSSSSu7zK1fslxtUO8_ZP8fSev7qe17zHvTSevTSeSSSSSS--&fn=prodinfo_nvc7500.pdf> [retrieved on 20110913]

## Description

La présente invention se rapporte au domaine des fluides pour systèmes de refroidissement de turboréacteur pour aéronef.

Un aéronef est propulsé par un ou plusieurs ensembles propulsifs comprenant chacun un turboréacteur logé dans une nacelle. Chaque ensemble propulsif est rattaché à l'aéronef par un mât situé généralement sous ou sur une aile ou au niveau du fuselage de l'aéronef.

Un turboréacteur peut également être appelé moteur. Dans la suite de la description, les termes moteur et turboréacteur seront utilisés indifféremment.

Une nacelle présente généralement une structure tubulaire comprenant une section amont comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

En outre, une nacelle comprend usuellement une structure externe comprenant une partie fixe et une partie mobile (moyens d'inversion de poussée), et une structure interne fixe, dite Inner Fixed Structure (IFS), concentrique de la structure externe. La structure interne fixe entoure le coeur du turboréacteur en arrière de la soufflante. Ces structures externe et interne définissent une veine annulaire d'écoulement, encore appelé veine secondaire, visant à canaliser un flux d'air froid, dit secondaire, qui circule à l'extérieur du turboréacteur.

La structure externe comporte un carénage externe définissant une surface aérodynamique externe, destinée à être au contact d'un flux d'air externe, et un carénage interne définissant une surface aérodynamique interne, destinée à être au contact du flux d'air secondaire. Les carénages interne et externe sont reliés en amont par une paroi de bord d'attaque formant lèvre d'entrée d'air.

De manière générale, le turboréacteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu dans le turboréacteur pour assurer une bonne lubrification de ces moyens de transmission et les refroidir. Le lubrifiant est de l'huile. Dans la suite de la description, on emploiera indifféremment les termes lubrifiant et huile.

Un système de refroidissement comportant un échangeur de chaleur permet de refroidir le lubrifiant.

Pour ce faire, une méthode connue consiste à refroidir le lubrifiant par circulation à travers un échangeur air/huile utilisant l'air froid de la veine secondaire (flux dit froid) de la nacelle ou d'un des premiers étages du compresseur, pour refroidir l'huile du turboréacteur. Un tel échangeur est un échangeur à ailettes. Il comporte des ailettes dans le flux d'air froid qui perturbent l'écoulement du flux d'air dans la veine secondaire ou dans le compresseur, ce qui entraîne des pertes de charges (traînée), et donc des pertes de performances pour l'aéronef en termes de consommation de carburant (paramètre FB (Fuel Burn)).

Une autre méthode connue consiste à refroidir le lubrifiant grâce à un système de refroidissement comprenant un échangeur air/huile utilisant de l'air froid prélevé à l'extérieur de la nacelle ou dans la veine secondaire, par une écope disposée respectivement sur le carénage externe ou interne de la nacelle, l'air froid étant mis en circulation à travers l'échangeur et pouvant servir au dégivrage de la nacelle, une fois réchauffé par le lubrifiant, par circulation dans des conduits disposés au contact des parois de la structure externe de la nacelle, par exemple au niveau de la lèvre d'entrée d'air. Un tel système permet un meilleur contrôle des énergies thermiques échangées, mais la présence d'écopes dans le carénage externe ou interne de la nacelle entraîne une perte des performances aérodynamiques, de la même manière qu'un échangeur à ailettes, et donc des pertes de performances pour l'aéronef en termes de consommation de carburant (paramètre FB (Fuel Burn))

La présence d'ailettes ou écopes dans le carénage interne ou externe de la nacelle entraîne une perte des performances aérodynamiques.

Une solution connue afin de limiter les perturbations du flux d'air, consiste à fournir un système de refroidissement comportant un échangeur surfacique entre le lubrifiant et de l'air. Un tel système de refroidissement comporte un conduit de circulation du lubrifiant en circuit fermé. Plus particulièrement, le conduit de circulation du lubrifiant comporte une portion disposée dans la nacelle au contact du carénage interne et/ou externe de la nacelle. Encore plus particulièrement, la portion disposée dans la nacelle au contact du carénage interne et/ou externe de la nacelle comporte une pluralité de canaux disposés en parallèle, lesdits canaux étant formés par une double paroi du carénage interne et/ou externe, on parle alors d'échangeur surfacique structural.

Le lubrifiant étant inflammable à des températures de l'ordre de 260°C, il est dangereux de le faire circuler le long de l'ensemble du carénage interne ou externe de la nacelle. En effet, certaines zones de la nacelle, dites zones feux, sont très sensibles aux flammes, car elles contiennent des produits inflammables et une source d'ignition. Par exemple certaines zones de la section aval destinées à entourer la chambre de combustion du turboréacteur (nommées compartiment core) sont systématiquement déclaré zone feu, ainsi que potentiellement certaines zones de la section médiane, destinées à entourer la soufflante du turboréacteur (nommées zones fan).

En outre, le lubrifiant est très visqueux à basse température. Il est donc nécessaire de disposer un moyen de décongélation pour pouvoir faire circuler le lubrifiant sur certaines zones de la nacelle exposées à des températures très faibles.

Le document FR 2 914 365 A1 décrit l'utilisation d'un fluide caloporteur dans un système de refroidissement de turboréacteur pour aéronef.

Un but de la présente invention est d'utiliser, dans un système de refroidissement de turboréacteur pour aéronef, un fluide caloporteur moins inflammable à des températures de l'ordre de 130°C, et moins visqueux à basse température qu'un lubrifiant pour turboréacteur, le fluide caloporteur étant destiné à circuler au contact du carénage externe et/ou interne de la nacelle afin de le refroidir, puis au contact du lubrifiant afin de refroidir le lubrifiant.

A cet effet, selon la revendication 1, l'invention a pour objet l'utilisation, dans un système de refroidissement de turboréacteur pour aéronef entouré d'une nacelle, d'un fluide caloporteur moins inflammable qu'un lubrifiant pour turboréacteur, et liquide à des températures entre - 70°C et +175°C, le fluide caloporteur étant destiné à circuler dans un conduit de circulation en circuit fermé comportant un premier échangeur surfacique entre le fluide caloporteur et de l'air, au niveau du carénage externe et/ou interne de la nacelle, et un deuxième échangeur entre le fluide caloporteur et le lubrifiant.

Par « moins inflammable que le lubrifiant » on entend que le fluide caloporteur est inflammable à des températures supérieures par rapport au lubrifiant. Le lubrifiant étant généralement inflammable à 260°C (point éclair), le fluide caloporteur est inflammable à des températures supérieures.

Ainsi, l'ensemble du carénage interne et externe de la nacelle peut être utilisé pour la circulation de fluide caloporteur, sans nécessiter de moyen de décongélation.

En outre, le fluide caloporteur peut également circuler dans la structure interne fixe de la nacelle.

Le premier échangeur est appelé échangeur source froide, tandis que le deuxième échangeur est appelé échangeur source chaude.

Selon une caractéristique, le premier échangeur surfacique comporte une pluralité de canaux disposés en parallèle.

Selon une caractéristique, le premier échangeur est formé au moins en partie par une double paroi du carénage interne et/ou externe de la nacelle.

Selon une caractéristique, le premier échangeur est formé au moins en partie par une double paroi de la structure interne fixe de la nacelle.

On parle alors d'échangeur surfacique structural

Selon une caractéristique, le fluide caloporteur est ininflammable.

Selon une caractéristique, le fluide caloporteur est liquide à des températures entre - 70°C et +175°C à des pressions inférieures à 10 bars.

Selon une caractéristique, le fluide caloporteur (C) présente un point d'ignition supérieur à 260°C, un point de combustion supérieur à 280°C et une température d'allumage autogène supérieure à 300°C.

Selon une caractéristique, le fluide caloporteur présente un point d'ignition supérieur à 260°C, un point de combustion supérieur à 280°C et une température d'allumage autogène supérieure à 400°C.

Ainsi, le fluide caloporteur peut circuler à proximité d'équipements électriques.

Selon une caractéristique, le fluide caloporteur présente une constante diélectrique inférieure à 6.

Selon une caractéristique, le fluide caloporteur appartient à la famille des hydrofluoroéthers (HFE). De cette façon, le fluide est apte à rester à l'état liquide à des températures inférieures à 130°C à pression atmosphérique, et donc dans l'ensemble de la nacelle.

Selon une autre caractéristique, le fluide caloporteur appartient à la famille des esters de silicate.

Selon une caractéristique, le conduit de circulation du fluide caloporteur comporte des moyens de régulation du volume occupé par le fluide caloporteur dans le conduit de circulation du fluide caloporteur, comportant de préférence un vase d'expansion. Ainsi, le fluide peut être utilisé à des températures supérieures à sa température d'ébullition à pression atmosphérique.

Un tel vase d'expansion est un réservoir fermé. Ainsi, la pression dans le vase d'expansion est directement liée au volume occupé par le fluide caloporteur dans le vase d'expansion. Cette caractéristique permet avantageusement de maîtriser une pression maximale et/ou minimale dans certaines portions du conduit de circulation du fluide caloporteur en jouant uniquement sur la capacité (volume) du réservoir.

Selon la revendication 9, l'invention concerne en outre un système de refroidissement de turboréacteur pour aéronef entouré d'une nacelle, comprenant :
- un premier échangeur surfacique entre un fluide caloporteur tel que décrit précédemment et de l'air,
- un deuxième échangeur entre le fluide caloporteur et le lubrifiant, et
- un conduit de circulation du fluide caloporteur en circuit fermé.

Selon une caractéristique, le premier échangeur surfacique comporte une pluralité de canaux disposés en parallèle.

Selon une caractéristique, le premier échangeur est formé au moins en partie par une double paroi du carénage interne et/ou externe de la nacelle.

Selon une caractéristique, le premier échangeur est formé au moins en partie par une double paroi de la structure interne fixe de la nacelle.

On parle alors d'échangeur surfacique structural.

Selon une caractéristique, le système de refroidissement comporte plusieurs premiers échangeurs surfaciques.

Selon cette caractéristique, les premiers échangeurs surfaciques sont formés au moins en partie par une double paroi du carénage interne et/ou du carénage externe et/ou de la structure interne fixe de la nacelle.

D'autres caractéristiques et avantages de la présente invention apparaîtront à la lecture de la description qui va suivre et à l'examen des figures annexées dans lesquelles :
[Fig. 1] est une vue schématique d'une nacelle comprenant un système de refroidissement selon l'invention,
[Fig. 2] est une vue schématique d'un système de refroidissement comprenant un fluide caloporteur selon l'invention,
[Fig. 3] est une vue schématique du carénage externe de la nacelle de la figure 1, comportant un échangeur surfacique entre le fluide caloporteur selon l'invention et de l'air;
[Fig. 4] est une vue schématique d'une partie de la structure interne fixe de la nacelle de la figure 1, comportant un échangeur surfacique entre le fluide caloporteur selon l'invention et de l'air.

Dans la description qui va suivre et dans les revendications, des composants identiques, similaires ou analogues seront désignés par les mêmes chiffres de référence et on emploiera les termes « amont », « aval », « supérieur », « inférieur », etc. à titre non limitatif et en référence aux dessins afin de faciliter la description.

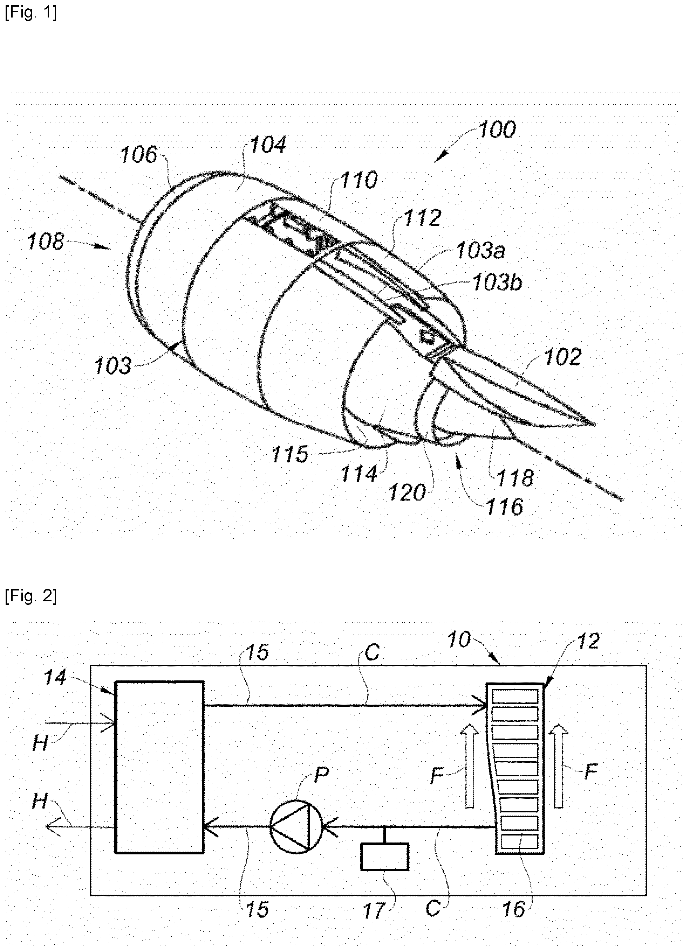

La figure 1 illustre une nacelle 100 suspendue à un pylône 102 destiné à être fixé à une aile (non représentée) d'un aéronef (non représenté). La nacelle 100 comprend une structure externe 103 comprenant une section amont 104 dotée d'une lèvre 106 formant une entrée d'air 108, une section médiane 110, et une section aval 112.

La nacelle comprend en outre une structure interne fixe 114 entourant une partie aval d'un turboréacteur (non représenté) de manière concentrique par rapport à la section aval 112. La structure interne fixe 114 et la structure externe 103 délimitent une veine annulaire 115 définissant un passage pour un flux d'air secondaire (non représenté) froid.

La nacelle 100 comprend également une tuyère d'éjection 116 comprenant un cône d'éjection 118 de gaz et une buse d'éjection 120 de gaz. Le cône d'éjection 118 et la buse d'éjection 120 définissent un passage pour un flux d'air chaud (non représenté) sortant du turboréacteur (non représenté).

La structure externe 103 comporte un carénage externe 103a définissant une surface aérodynamique externe, et un carénage interne 103b définissant une surface aérodynamique interne, les carénages externe 103a et interne 103b étant reliés en amont par une paroi de bord d'attaque (non représentée) formant la lèvre 106 d'entrée d'air 108.

La nacelle comprend un échangeur surfacique dit source froide 12 (figure 2) entre un fluide caloporteur C (figure 2) à refroidir et un flux d'air froid F (figure 2).

Le flux d'air froid F peut être le flux d'air secondaire ou un flux d'air extérieur.

L'échangeur surfacique source froide 12 est disposé dans la structure externe 103. Il est destiné à coopérer avec un échangeur dit source chaude 14 (figure 2) entre un lubrifiant H (figure 2) pour turboréacteur à refroidir et le fluide caloporteur C, par l'intermédiaire d'un conduit de circulation 15 (figure 2) de fluide caloporteur C.

L'échangeur source chaude 14 peut par exemple être disposé dans le turboréacteur (non représenté).

L'ensemble échangeur surfacique source froide 12 et l'échangeur source chaude 14 forme un système de refroidissement 10 (figure 2) du turboréacteur.

La figure 2 illustre le système de refroidissement 10 du turboréacteur.

Le système de refroidissement 10 comprend l'échangeur surfacique source froide 12 et l'échangeur source chaude 14.

Le fluide caloporteur C circule dans le conduit de circulation 15 et dans l'échangeur surfacique source froide 12 où il est refroidi par de l'air froid F. Le fluide caloporteur C ainsi refroidi circule alors dans l'échangeur source chaude 14 où il est réchauffé par le lubrifiant H.

Ainsi, le fluide caloporteur C refroidi par l'échangeur surfacique source froide permet de refroidir le lubrifiant H.

Le fluide caloporteur C est destiné à circuler à la fois dans l'échangeur surfacique source froide 12 et dans l'échangeur source chaude 14.

Le fluide caloporteur C est du NovecTM 7500.

Il fait partie de la famille des hydrofluoroéthers (HFE).

Ce fluide est ininflammable, et liquide à des températures entre -70°C et +175°C à des pressions inférieures à 10 bars. Il présente un point d'ignition supérieur à 260°C, un point de combustion supérieur à 280°C et une température d'allumage autogène supérieure à 400°C. Il présente en outre une constante diélectrique inférieure à 6. Une pompe P permet la circulation du fluide caloporteur C entre l'échangeur surfacique source froide 10 et l'échangeur source chaude 14.

Un vase d'expansion 17 permet de définir une pression maximale et/ou minimale dans certaines portions du conduit de circulation 15 du fluide caloporteur C. Le vase d'expansion 17 est fermé de sorte que son volume est lié à la pression du conduit de circulation 15 du fluide caloporteur C. Il est rempli de fluide caloporteur C et d'un volume sans fluide caloporteur, nommé ciel gazeux, qui fait office de tampon. Il permet de limiter la pression dans le conduit de circulation 15 du fluide caloporteur lors de la dilatation du fluide en fonction de la température.

Le vase d'expansion 17 est un moyen de régulation du volume occupé par le fluide caloporteur C dans le conduit de circulation 15 du fluide caloporteur.

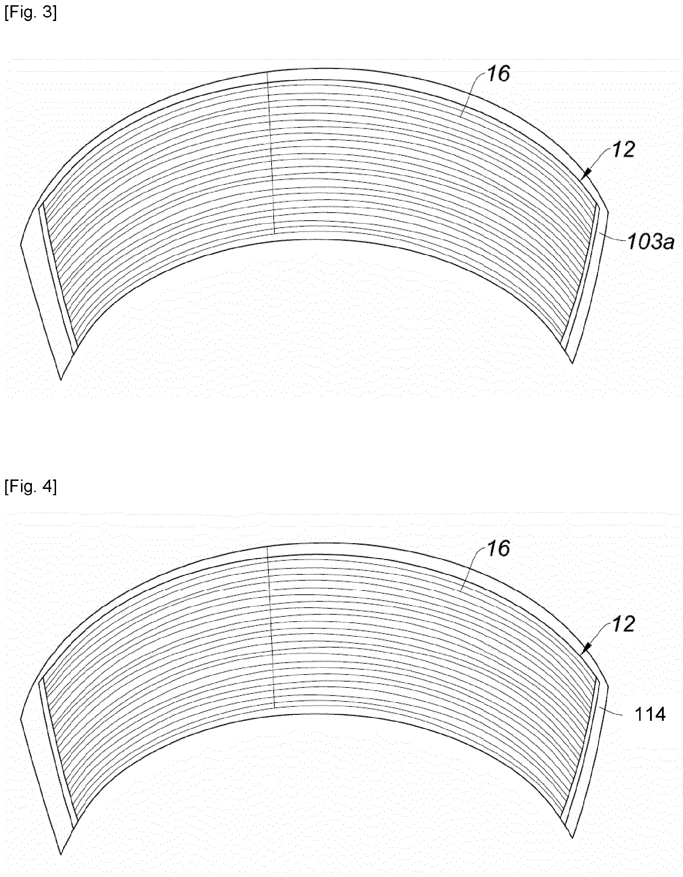

La figure 3 illustre le carénage externe 103a au niveau de la section aval 112 d'une nacelle 100 (figure 1) comportant un échangeur surfacique source froide 12.

L'échangeur surfacique source froide 12 comprend une pluralité de canaux 16 disposés en parallèle, dans lesquels circule le fluide caloporteur C. Les canaux 16 sont disposés au contact du carénage externe 103a. Ils sont formés par une double paroi du carénage externe 103a de la nacelle. On parle alors d'échangeur surfacique structural.

Le carénage externe 103a étant au contact d'un flux d'air extérieur froid, l'échange de chaleur est réalisé par convection avec le flux d'air extérieur froid.

Dans une variante non représentée, l'échangeur surfacique source froide 12 est disposé au contact du carénage interne 103b et l'échange de chaleur est réalisé par convection avec le flux d'air froid secondaire.

Dans une variante non représenté, l'échangeur surfacique source froide 12 est disposé au contact du carénage externe 103a et du carénage interne 103b et l'échange de chaleur est réalisé par convection avec le flux d'air froid extérieur et le flux d'air froid secondaire.

La figure 4 illustre une partie de la structure interne fixe 114 d'une nacelle 100 (figure 1) comportant un échangeur surfacique source froide 12 tel que décrit au regard de la figure 3.

La structure interne fixe 114 est au contact du flux d'air secondaire. L'échange de chaleur est donc réalisé par convection avec le flux d'air secondaire.

## Revendications

1. Utilisation, dans un système de refroidissement (10) de turboréacteur pour aéronef entouré d'une nacelle (100), d'un fluide caloporteur (C) moins inflammable qu'un lubrifiant (H) pour turboréacteur et liquide à des températures entre -70°C et +175°C à des pressions inférieures à 10 bars, le système de refroidissement comportant un premier échangeur surfacique (12) entre le fluide caloporteur (C) et de l'air, un deuxième échangeur surfacique (14) entre le fluide caloporteur (C) et le lubrifiant (H), et un conduit de circulation (15) du fluide caloporteur (C) en circuit fermé, le fluide caloporteur (C) circulant dans le conduit de circulation (15) en circuit fermé comportant le premier échangeur surfacique (12) entre le fluide caloporteur (C) et de l'air (F), au niveau du carénage externe (103a) et/ou interne (103b) de la nacelle (100), et le deuxième échangeur surfacique (14) entre le fluide caloporteur (C) et le lubrifiant (H).

2. Utilisation d'un fluide caloporteur selon la revendication précédente, **caractérisé en ce que** le premier échangeur surfacique (12) comporte une pluralité de canaux (16) disposés en parallèle.

3. Utilisation d'un fluide caloporteur selon l'une quelconque des revendications précédentes, **caractérisé en ce que** le premier échangeur (12) est formé au moins en partie par une double paroi du carénage interne (103b) et/ou externe (103a) de la nacelle (100).

4. Utilisation d'un fluide caloporteur selon l'une quelconque des revendications 1 à 2, **caractérisé en ce que** le premier échangeur (12) est formé au moins en partie par une double paroi de la structure interne fixe (114) de la nacelle (100).

5. Utilisation d'un fluide caloporteur selon l'une quelconque des revendications précédentes, **caractérisé en ce que** le fluide caloporteur (C) est ininflammable.

6. Utilisation d'un fluide caloporteur selon l'une quelconque des revendications précédentes, **caractérisé en ce que** le fluide caloporteur (C) présente un point d'ignition supérieur à 260°C, un point de combustion supérieur à 280°C et une température d'allumage autogène supérieure à 300°C.

7. Utilisation d'un fluide caloporteur selon l'une quelconque des revendications précédentes, **caractérisé en ce que** le fluide caloporteur (C) appartient à la famille des hydrofluoroéthers (HFE) ou des esters de silicate.

8. Utilisation d'un fluide caloporteur selon l'une quelconque des revendications précédentes, **caractérisé en ce que** le conduit de circulation (15) du fluide caloporteur (C) comporte des moyens de pressurisation (17) du conduit de circulation du fluide caloporteur.

9. Système de refroidissement (10) de turboréacteur pour aéronef entouré d'une nacelle (100), comprenant :
- un premier échangeur surfacique (12) entre un fluide caloporteur (C) et de l'air,
- un deuxième échangeur surfacique (14) entre le fluide caloporteur (C) et un lubrifiant (H) pour turboréacteur, et
- un conduit de circulation (15) du fluide caloporteur (C) en circuit fermé ;
le fluide caloporteur (C) étant moins inflammable qu'un lubrifiant (H) pour turboréacteur et liquide à des températures entre -70°C et +175°C à des pressions inférieures à 10 bars, le fluide caloporteur (C) circulant dans le conduit de circulation (15) en circuit fermé comportant le premier échangeur surfacique (12) et le deuxième échangeur surfacique (14) entre le fluide caloporteur (C) et le lubrifiant (H).

10. Système de refroidissement selon la revendication précédente, dans lequel le premier échangeur surfacique (12) comporte une pluralité de canaux (16) disposés en parallèle.

11. Système de refroidissement selon l'une quelconque des revendications 9 et 10, dans lequel le premier échangeur (12) est formé au moins en partie par une double paroi du carénage interne (103b) et/ou externe (103a) de la nacelle (100).

12. Système de refroidissement selon l'une quelconque des revendications 9 et 10, dans lequel le premier échangeur (12) est formé au moins en partie par une double paroi de la structure interne fixe (114) de la nacelle (100).

## Patentansprüche

1. Verwendung eines Wärmeübertragungsfluids (C), das weniger entflammbar ist als ein Schmiermittel (H) für ein Turbostrahltriebwerk und bei Temperaturen zwischen -70 °C und +175 °C bei Drücken unter 10 bar flüssig ist, in einem Kühlsystem (10) eines Turbostrahltriebwerks für ein Flugzeug, das von einer Gondel (100) umgeben ist, wobei das Kühlsystem einen ersten Flächenaustauscher (12) zwischen dem Wärmeübertragungsfluid (C) und der Luft, einen zweiten Flächenaustauscher (14) zwischen dem Wärmeübertragungsfluid (C) und dem Schmiermittel (H) und eine Zirkulationsleitung (15) für das Wärmeübertragungsfluid (C) in einem geschlossenen Kreislauf umfasst, wobei das Wärmeübertragungsfluid (C) in der Zirkulationsleitung (15) in einem geschlossenen Kreislauf zirkuliert, der den ersten Flächenaustauscher (12) zwischen dem Wärmeübertragungsfluid (C) und der Luft (F) auf der Höhe der äußeren (103a) und/oder der inneren (103b) Verkleidung der Gondel (100) und den zweiten Flächenaustauscher (14) zwischen dem Wärmeübertragungsfluid (C) und dem Schmiermittel (H) umfasst.

2. Verwendung eines Wärmeübertragungsfluids nach dem vorhergehenden Anspruch, **dadurch gekennzeichnet, dass** der erste Flächenaustauscher (12) eine Vielzahl von parallel angeordneten Kanälen (16) umfasst.

3. Verwendung eines Wärmeübertragungsfluids nach einem der vorhergehenden Ansprüche, **dadurch gekennzeichnet, dass** der erste Austauscher (12) mindestens teilweise durch eine Doppelwand der inneren (103b) und/oder der äußeren (103a) Verkleidung der Gondel (100) gebildet wird.

4. Verwendung eines Wärmeübertragungsfluids nach einem der Ansprüche 1 bis 2, **dadurch gekennzeichnet, dass** der erste Austauscher (12) mindestens teilweise durch eine Doppelwand der festen Innenstruktur (114) der Gondel (100) gebildet wird.

5. Verwendung eines Wärmeübertragungsfluids nach einem der vorhergehenden Ansprüche, **dadurch gekennzeichnet, dass** das Wärmeübertragungsfluid (C) nicht entflammbar ist.

6. Verwendung eines Wärmeübertragungsfluids nach einem der vorhergehenden Ansprüche, **dadurch gekennzeichnet, dass** das Wärmeübertragungsfluid (C) einen Entzündungspunkt von mehr als 260 °C, einen Verbrennungspunkt von mehr als 280 °C und eine Selbstentzündungstemperatur von mehr als 300 °C aufweist.

7. Verwendung eines Wärmeübertragungsfluids nach einem der vorhergehenden Ansprüche, **dadurch gekennzeichnet, dass** das Wärmeübertragungsfluid (C) zur Familie der Hydrofluorether (HFE) oder Silikatester gehört.

8. Verwendung eines Wärmeübertragungsfluids nach einem der vorhergehenden Ansprüche, **dadurch gekennzeichnet, dass** die Zirkulationsleitung (15) für das Wärmeübertragungsfluid (C) Mittel zur Druckbeaufschlagung (17) der Zirkulationsleitung für das Wärmeübertragungsfluid umfasst.

9. Kühlsystem (10) für ein Turbostrahltriebwerk für ein Flugzeug, das von einer Gondel (100) umgeben ist und Folgendes umfasst:
- einen ersten Flächenaustauscher (12) zwischen einem Wärmeübertragungsfluid (C) und der Luft,
- einen zweiten Flächenaustauscher (14) zwischen dem Wärmeübertragungsfluid (C) und einem Schmiermittel (H) für ein Turbostrahltriebwerk, und
- eine Zirkulationsleitung (15) für das Wärmeübertragungsfluid (C) in einem geschlossenen Kreislauf;
wobei das Wärmeübertragungsfluid (C) weniger entflammbar ist als ein Schmiermittel (H) für ein Turbostrahltriebwerk und bei Temperaturen zwischen -70 °C und +175 °C bei Drücken unter 10 bar flüssig ist, wobei das Wärmeübertragungsfluid (C) in der Zirkulationsleitung (15) in einem geschlossenen Kreislauf zirkuliert, der den ersten Flächenaustauscher (12) und den zweiten Flächenaustauscher (14) zwischen dem Wärmeübertragungsfluid (C) und dem Schmiermittel (H) umfasst.

10. Kühlsystem nach dem vorhergehenden Anspruch, wobei der erste Flächenaustauscher (12) eine Vielzahl von parallel angeordneten Kanälen (16) umfasst.

11. Kühlsystem nach einem der Ansprüche 9 und 10, wobei der erste Austauscher (12) mindestens teilweise durch eine Doppelwand der der inneren (103b) und/oder der äußeren (103a) Verkleidung der Gondel (100) gebildet wird.

12. Kühlsystem nach einem der Ansprüche 9 und 10, wobei der erste Austauscher (12) mindestens teilweise durch eine Doppelwand der festen Innenstruktur (114) der Gondel (100) gebildet wird.

## Claims

1. A use, in a cooling system (10) of an aircraft turbojet engine surrounded by a nacelle (100), of a heat-transfer fluid (C) less flammable than a turbojet engine lubricant (H) and liquid at temperatures between -70°C and +175°C at pressures lower than 10 bars, the cooling system including a first surface heat-exchanger (12) between the heat-transfer fluid (C) and air, a second surface heat-exchanger (14) between the heat-transfer fluid (C) and the lubricant (H), and a closed-circuit circulation duct (15) of the heat-transfer fluid (C), the heat-transfer fluid (C) circulating in the closed-circuit circulation duct (15) including the first surface heat-exchanger (12) between the heat-transfer fluid (C) and air (F), at the outer (103a) and/or inner (103b) fairing of the nacelle (100), and the second surface heat-exchanger (14) between the heat-transfer fluid (C) and the lubricant (H).

2. The use of a heat-transfer fluid according to the preceding claim, **characterized in that** the first surface heat-exchanger (12) includes a plurality of channels (16) disposed in parallel.

3. The use of a heat-transfer fluid according to any one of the preceding claims, **characterized in that** the first heat-exchanger (12) is formed at least partially by a double-wall of the inner (103b) and/or outer (103a) fairing of the nacelle (100).

4. The use of a heat-transfer fluid according to any one of claims 1 and 2, **characterized in that** the first heat-exchanger (12) is formed at least partially by a double-wall of the inner fixed structure (114) of the nacelle (100).

5. The use of a heat-transfer fluid according to any one of the preceding claims, **characterized in that** the heat-transfer fluid (C) is nonflammable.

6. The use of a heat-transfer fluid according to any one of the preceding claims, **characterized in that** the heat-transfer fluid (C) has an ignition point higher than 260°C, a combustion point higher than 280°C and an auto-ignition temperature higher than 300°C.

7. The use of a heat-transfer fluid according to any one of the preceding claims, **characterized in that** the heat-transfer fluid (C) belongs to the family of hydrofluoroethers (HFE) or silicate esters.

8. The use of a heat-transfer fluid according to any one of the preceding claims, **characterized in that** the circulation duct (15) of the heat-transfer fluid (C) includes means (17) for pressurizing the circulation duct of the heat-transfer fluid.

9. A cooling system (10) of an aircraft turbojet engine surrounded by a nacelle (100), comprising:
- a first surface heat-exchanger (12) between a heat-transfer fluid (C) and air,
- a second surface heat-exchanger (14) between the heat-transfer fluid (C) and a lubricant (H) for the turbojet engine, and
- a closed-circuit circulation duct (15) of the heat-transfer fluid (C);
the heat-transfer fluid (12) being less flammable than a turbojet engine lubricant (H) and liquid at temperatures between -70°C and +175°C at pressures lower than 10 bars, the heat-transfer fluid (C) circulating in the closed-circuit circulation duct (15) including the first surface heat-exchanger (12) and the second surface heat-exchanger (14) between the heat-transfer fluid (C) and the lubricant (H)

10. The cooling system according to the preceding claim, wherein the first surface heat-exchanger (12) includes a plurality of channels (16) disposed in parallel.

11. The cooling system according to any one of claims 9 and 10, wherein the first heat-exchanger (12) is formed at least partially by a double-wall of the inner (103b) and/or outer (103a) fairing of the nacelle (100).

12. The cooling system according to any one of claims 9 and 10, wherein the first heat-exchanger (12) is formed at least partially by a double-wall of the inner fixed structure (114) of the nacelle (100).
